# EUROPEAN PATENT APPLICATION

(11) **EP 4 645 980 A1**
(43) Date of publication of application: **05.11.2025**
(21) Application number: 22969716.4
(22) Date of filing: 29.12.2022
(51) Int. Cl.: H04W 72/0446

(54) **RESOURCE DETERMINATION METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2022/143618
(87) International publication number: WO 2024/138569

(57) **Abstract**

The present disclosure provides a resource determination method and apparatus, and a storage medium. The method comprises: determining a time domain resource range to which a time domain resource occupied by a subband belongs, wherein the subband is located on a first time unit, and the transmission direction of the first time unit is opposite to the transmission direction of the subband or the transmission direction of the first time unit is variable. According to the present disclosure, a time domain resource range to which a time domain resource occupied by a subband belongs can be accurately determined, so that the reliability of full-duplex communication is improved, and the availability is high.

## Description

### TECHNICAL FIELD

The disclosure relates to the communication field, in particular to a resource determination method, a resource determination apparatus and a storage medium.

### BACKGROUND

Release-18 (Rel-18) duplex enhancement project has studied a duplex solution, i.e., a base station can receive and send data simultaneously in one slot. Currently, 3rd Generation Partnership Project (3GPP) determines that the base station can configure a time domain resource occupied by a subband for a user equipment (UE).

However, there is still a lack of specific solutions on how to configure a time domain resource range to which the time domain resource occupied by the subband belongs for different time division duplexing (TDD) slot structures.

### SUMMARY

To overcome problems existing in related arts, the embodiments of the disclosure provide a resource determination method, a resource determination apparatus and a storage medium.

According to a first aspect of embodiments of the disclosure, a resource determination method is provided. The method is performed by a UE, and includes:
determining a time domain resource range to which a time domain resource occupied by a subband belongs, in which the subband is at a first time unit, a transmission direction of the first time unit is opposite to a transmission direction of the subband or the transmission direction of the first time unit is flexible.

In an embodiment of the disclosure, determining the time domain resource range to which the time domain resource occupied by the subband belongs, includes:
determining a plurality of time units within at least one first periodicity as the time domain resource range, in which the first periodicity is a period indicated by a base station through a first TDD slot structure.

In an embodiment of the disclosure, the first TDD slot structure includes any one of:
a common TDD slot structure;
a UE-dedicated TDD slot structure; and
the common TDD slot structure and the UE-dedicated TDD slot structure.

In an embodiment of the disclosure, in a case that there are a plurality of first periodicities, determining the plurality of time units within the at least one first periodicity as the time domain resource range, includes:
determining a plurality of time units within a plurality of the first periodicities as the time domain resource range; or
determining a plurality of time units within each of the first periodicities as the time domain resource range, respectively.

In an embodiment of the disclosure, the method further includes:
receiving an indication from a base station, in which the indication indicates a first time domain resource range;
determining the time domain resource range to which the time domain resource occupied by the subband belongs, including:
   determining the first time domain resource range as the time domain resource range.

In an embodiment of the disclosure, the indication includes any one of:
a system message; and
a UE-dedicated Radio Resource Control (RRC) message.

In an embodiment of the disclosure, the method further includes:
determining a second time domain resource range based on a predefined first value and a first time granularity;
determining the time domain resource range to which the time domain resource occupied by the subband belongs, including:
   determining the second time domain resource range as the time domain resource range.

In an embodiment of the disclosure, the method further includes:
determining, based on a correspondence relationship between different sub-carrier spaces (SCSs) and different values and time granularities, a second value and a second time granularity corresponding to an SCS of a serving cell; and
determining a third time domain resource range based on the second value and the second time granularity;
determining the time domain resource range to which the time domain resource occupied by the subband belongs, including:
   determining the third time domain resource range as the time domain resource range.

In an embodiment of the disclosure, the method further includes:
determining a second periodicity indicated by a Slot Format Indicator (SFI) combination;
determining the time domain resource range to which the time domain resource occupied by the subband belongs, including:
   determining a plurality of time units within the second periodicity having the longest period duration as the time domain resource range.

According to a second aspect of embodiments of the disclosure, a resource determination method is provided. The method is performed by a base station, and includes:
determining a time domain resource range to which time domain resource occupied by a subband belongs, in which the subband is at a first time unit, a transmission direction of the first time unit is opposite to a transmission direction of the subband or the transmission direction of the first time unit is flexible.

In an embodiment of the disclosure, determining the time domain resource range to which the time domain resource occupied by the subband belongs, includes:
determining a plurality of time units within at least one first periodicity as the time domain resource range, in which the first periodicity is a period indicated by the base station through a first TDD slot structure.

In an embodiment of the disclosure, the first TDD slot structure includes any one of:
a common TDD slot structure;
a UE-dedicated TDD slot structure; and
the common TDD slot structure and the UE-dedicated TDD slot structure.

In an embodiment of the disclosure, in a case that there are a plurality of first periodicities, determining the plurality of time units within the at least one first periodicity as the time domain resource range, includes:
determining a plurality of time units within a plurality of the first periodicities as the time domain resource range; or
determining a plurality of time units within each of the first periodicities as the time domain resource range, respectively.

In an embodiment of the disclosure, the method further includes:
sending an indication to a UE, in which the indication indicates a first time domain resource range;
determining the time domain resource range to which the time domain resource occupied by the subband belongs, including:
   determining the first time domain resource range as the time domain resource range.

In an embodiment of the disclosure, the indication includes any one of:
a system message; and
a UE-dedicated RRC message.

In an embodiment of the disclosure, the method further includes:
determining a second time domain resource range based on a predefined first value and a first time granularity;
determining the time domain resource range to which the time domain resource occupied by the subband belongs, including:
   determining the second time domain resource range as the time domain resource range.

In an embodiment of the disclosure, the method further includes:
determining, based on a correspondence relationship between different SCSs and different values and time granularities, a second value and a second time granularity corresponding to an SCS of a serving cell; and
determining a third time domain resource range based on the second value and the second time granularity;
determining the time domain resource range to which the time domain resource occupied by the subband belongs, including:
   determining the third time domain resource range as the time domain resource range.

In an embodiment of the disclosure, the method further includes:
determining a second periodicity indicated by a SFI combination;
determining the time domain resource range to which the time domain resource occupied by the subband belongs, including:
   determining a plurality of time units within the second periodicity having the longest period duration as the time domain resource range.

According to a third aspect of embodiments of the disclosure, a resource determination apparatus is provided. The apparatus is applied to a UE, and includes:
a first determining module, configured to determine a time domain resource range to which a time domain resource occupied by a subband belongs, in which the subband is at a first time unit, a transmission direction of the first time unit is opposite to a transmission direction of the subband or the transmission direction of the first time unit is flexible.

According to a fourth aspect of embodiments of the disclosure, a resource determination apparatus is provided. The apparatus is applied to a base station, and includes:
a second determining module, configured to determine a time domain resource range to which a time domain resource occupied by a subband belongs, in which the subband is at a first time unit, a transmission direction of the first time unit is opposite to a transmission direction of the subband or the transmission direction of the first time unit is flexible.

According to a fifth aspect of embodiments of the disclosure, a computer readable storage medium is provided. The storage medium stores a computer program, and the computer program is used to execute the resource determination method performed by the UE.

According to a sixth aspect of embodiments of the disclosure, a computer readable storage medium is provided. The storage medium stores a computer program, and the computer program is used to execute the resource determination method performed by the base station.

According to a seventh aspect of embodiments of the disclosure, a resource determination apparatus is provided. The device includes:
a processor; and
a memory for storing instructions executable by the processor;
in which the processor is configured to execute the resource determination method performed by the UE.

According to an eighth aspect of embodiments of the disclosure, a resource determination apparatus is provided. The device includes:
a processor; and
a memory for storing instructions executable by the processor;
in which the processor is configured to execute the resource determination method performed by the base station.

The technical solution provided by the embodiments of the disclosure has the following beneficial effects.

In the disclosure, the UE can accurately determine the time domain resource range to which the time domain resource occupied by the subband belongs under different TDD slot structures. The subband is at the first time unit, and the transmission direction of the first time unit is opposite to that of the subband or the transmission direction of the first time unit is flexible. Determining the time domain resource occupied by the subband within the time domain resource range can reduce the time for the UE to determine the time domain resource occupied by the subband, thereby improving the reliability of duplex traffic and realizing a high availability.

It is understandable that the above general description and the following detailed descriptions are illustrative and explanatory only and do not limit the disclosure.

### BRIEF DESCRIPTION OF THE DRAWINGS

The accompanying drawings, which are incorporated in and constitute a part of the specification, illustrate embodiments consistent with the disclosure and, together with the description, serve to explain the technical solutions of the disclosure.
FIG. 1 is a flowchart of a resource determination method according to an example embodiment.
FIG. 2 is a flowchart of another resource determination method according to another example embodiment.
FIG. 3 is a schematic diagram of a time division duplexing (TDD) slot structure according to an example embodiment.
FIG. 4 is a block diagram of a resource determination apparatus according to an example embodiment.
FIG. 5 is a block diagram of another resource determination apparatus according to another example embodiment.
FIG. 6 is a structural schematic diagram of a resource determining apparatus according to an example embodiment of the disclosure.
FIG. 7 is a structural schematic diagram of another resource determining apparatus according to an example embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

Release-18 (Rel-18) duplex enhancement project has studied a duplex solution, i.e., a base station can receive and send data simultaneously in one slot.

Currently, for time division duplexing (TDD) carriers, multiple TDD slot structures are provided, including but not limited to the following TDD slot structures:
a single periodicity TDD slot structure configured through a common TDD configuration (tdd-UL-DL-ConfigurationCommon);
a dual periodicity TDD slot structure configured through tdd-UL-DL-ConfigurationCommon;
a TDD slot structure configured by tdd-UL-DL-ConfigurationCommon and a dedicated TDD configuration (tdd-UL-DL-ConfigurationDedicated); and
in a case that the base station does not configure any TDD UL-DL configuration, all orthogonal frequency division multiplexing (OFDM) symbols being flexible symbols.

The TDD slot structure configured by tdd-UL-DL-ConfigurationDedicated also includes a single periodicity TDD slot structure and a dual periodicity TDD slot structure.

The flexible symbol refers to a symbol whose transmission direction is flexible. The base station can configure the transmission direction of the flexible symbol as Uplink (UL) or Downlink (DL) according to actual needs.

Based on the current TDD slot structures, it is able to be seen that current frame structures are very flexible, and there may be a plurality of continuous DL symbols, UL symbols or flexible symbols.

Currently, there is still a lack of specific solutions on how to configure a time domain resource range to which a time domain resource occupied by a subband belongs under different TDD slot structures.

To overcome the above technical problems, the disclosure provides a resource determination method, a resource determination apparatus and a storage medium.

A resource determination method performed by a UE in the disclosure will be introduced first.

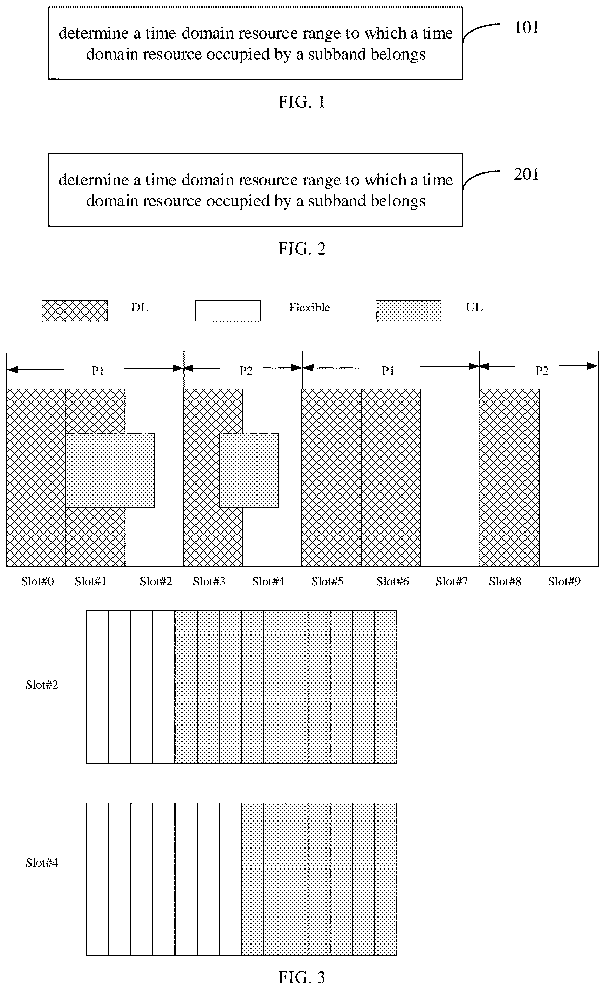

An embodiment of the disclosure provides a resource determination method. As illustrated in FIG. 1, FIG. 1 is a flowchart of a resource determination method illustrated by an embodiment. The method is performed by a UE, and includes the following steps.

At step 101, a time domain resource range to which a time domain resource occupied by a subband belongs is determined.

In the embodiments of the disclosure, the subband is at a first time unit, and a transmission direction of the first time unit is opposite to a transmission direction of the subband, or the transmission direction of the first time unit is flexible.

The first time unit may be a seamless bidirectional forwarding detection (SBFD) time unit. The SBFD time unit is a time unit where information is able to be transmitted in different directions.

For example, the SBFD time unit may be a DL time unit including an UL subband, a flexible time unit (i.e., a time unit whose transmission direction is flexible) including an UL subband, an UL time unit including a DL subband, or a flexible time unit including a DL subband, which is not limited by the disclosure.

The first time unit may be in units of a slot, a symbol or a span, which is not limited by the disclosure. One span includes several consecutive symbols.

In a possible implementation, the UE determines the time domain resource range based on a protocol.

In another possible implementation, the UE determines the time domain resource range based on an indication sent by the base station.

After determining the time domain resource range, the UE determines a specific time domain resource occupied by the subband within the time domain resource range.

The way to determine the specific time domain resource occupied by subband is indicated by the base station through a separate display signaling, which is not limited by the disclosure.

In the above embodiments, the UE may accurately determine, under any TDD slot structure, the time domain resource range to which the time domain resource occupied by the subband belongs. The subband is at the first time unit, and the transmission direction of the first time unit is opposite to the transmission direction of the subband or the transmission direction of the first time unit is flexible, which improves a reliability of duplex traffic and realizes a high availability.

In some optional embodiments, after determining the time domain resource range, the UE may determine, based on the indication of the display signaling sent by the base station, a position of the specific time domain resource occupied by the subband within the time domain resource range.

Certainly, the UE may also determine the position of the specific time domain resource occupied by the subband according to the protocol, which is not limited by the disclosure.

In some optional embodiments, the UE may determine a plurality of time units within at least one first periodicity as the time domain resource range. The first periodicity is a period indicated by the base station through a first TDD slot structure.

In the embodiments of the disclosure, the first TDD slot structure includes, but is not limited to, any of the following: a common TDD slot structure, a UE-dedicated TDD slot structure, and both the common TDD slot structure and the UE-dedicated TDD slot structure.

In the embodiments of the disclosure, the common TDD slot structure may be a TDD slot structure shared by a plurality of UEs, which is configured by the base station for the UE through tdd-UL-DL-ConfigurationCommon. The base station may carry the tdd-UL-DL-ConfigurationCommon through a system information block1 (SIB1).

The UE-dedicated TDD slot structure may be a UE-dedicated TDD slot structure configured for the UE by the base station through tdd-UL-DL-ConfigurationDedicated. The base station may carry the tdd-UL-DL-ConfigurationDedicated in a radio resource control (RRC) message.

The common TDD slot structure may include one or more first periodicities. The UE-dedicated TDD slot structure may also include one or more first periodicities.

In a case where there are a plurality of first periodicities, the UE may determine all the time units within the plurality of first periodicities as the time domain resource range.

Alternatively, in a case where there are a plurality of first periodicities, the UE may determine a plurality of time units within each of the first periodicities as the time domain resource range, respectively.

In the above embodiment, the UE may determine a plurality of time units within at least one first periodicity as the time domain resource range according to the protocol, to achieve a purpose of accurately determining the time domain resource range to which the time domain resource occupied by the subband belongs, thereby improving the reliability of full-duplex traffic and realizing a high availability.

In some optional embodiments, the UE determines the time domain resource range based on an indication sent by the base station.

In a possible implementation, the indication is sent through an explicit signaling. That is, the base station directly indicates the first time domain resource range, so that the UE may determine the first time domain resource range as the time domain resource range.

For example, the indication may include a system message, such as SIBn, n being a positive integer. Alternatively, the indication may include an RRC message.

For example, when the indication indicates that the first time domain resource range includes a total of m time units starting from the n-th time unit, the UE determines the time domain resource range of (n, n+m-1) as the time domain resource range. The time unit may be in units of slot, symbol or span.

Certainly, the base station may send the indication to the UE in an implicit way, so that the UE may determine the time domain resource range, which is not limited in the disclosure.

**In the** above embodiments, the UE may determine the time domain resource range based on the indication sent by the base station, to achieve the purpose of accurately determining the time domain resource range to which the time domain resource occupied by the subband belongs, thereby improving the reliability of full-duplex traffic and realizing a high availability.

**In** some optional embodiments, a first value and a first time granularity may be agreed upon by a protocol. The UE determines a second time domain resource range based on the predefined first value and the first time granularity, and determines the second time domain resource range as the time domain resource range. The first value may be a positive number, and the first time granularity may be a real time, for example, milliseconds or other time granularities such as slot, symbol, etc.

For example, when the protocol stipulates that the first value is 10 and the first time granularity is milliseconds, the UE determines a time domain resource range of 10 milliseconds as the time domain resource range.

For another example, when the protocol stipulates that the first value is 20 and the first time granularity is milliseconds, the UE determines a time domain resource range of 20 milliseconds as the time domain resource range.

In the embodiments of the disclosure, the protocol may stipulate a correspondence relationship between different sub-carrier spaces (SCSs) and different values and time granularities, so that the UE may determine a corresponding second value and a second time granularity based on an SCS of a current serving cell. The UE determines a third time domain resource range based on the second value and second time granularity, and then determines the third time domain resource range as the time domain resource range.

For example, when the SCS of the current serving cell is 15 kilohertz (kHz), the corresponding second value is 1 and the second time granularity is slot, the UE can determine 1 slot as the time domain resource range.

In the above embodiments, the UE may accurately determine the time domain resource range to which the time domain resource occupied by the subband belongs based on the predefined value and time unit granularity defined by the protocol or in a manner stipulated by the protocol, which improves a reliability of full-duplex traffic and realizes a high availability.

In some optional embodiments, the UE may determine one or more second periodicities indicated by a slot format indication (SFI) combination. Further, the terminal may determine all the time units within the second periodicity having the longest period duration as the time domain resource range.

It should be noted that an SFI indicates a cell-specific TDD slot structure, and the SIF combination is sent to the UE in a form of a list. That is, the base station sends the SIF combination to the UE through a list, and each column of the list corresponds to one SIF combination.

Certainly, the UE may also determine a plurality of time units within the second periodicity having the shortest period duration as the time domain resource range. Alternatively, the UE may determine a plurality of time units in any other second periodicity as the time domain resource range, which is not limited by the disclosure.

In the above embodiments, the UE may determine the second periodicity based on the SIF combination, and then determine the time domain resource range based on the second periodicity, to achieve the purpose of accurately determining the time domain resource range to which the time domain resource occupied by the subband belongs, thereby improving a reliability of full-duplex traffic and realizing a high availability.

A resource determination method performed by a base station in the disclosure will be introduced below.

An embodiment of the disclosure provides a resource determination method. As illustrated in FIG. 2, FIG. 2 is a flowchart of another resource determination method illustrated by an embodiment. The method is performed by a base station, and includes the following steps.

At step 201, a time domain resource range to which a time domain resource occupied by a subband belongs is determined.

In the embodiments of the disclosure, the subband is at a first time unit, and a transmission direction of the first time unit is opposite to a transmission direction of the subband or the transmission direction of the first time unit is flexible.

The first time unit may be an SBFD time unit. The SBFD time unit is a time unit where information is able to be transmitted in different directions.

For example, the SBFD time unit may be a DL time unit including an UL subband, a flexible time unit (i.e., a time unit whose transmission direction is flexible) including an UL subband, an UL time unit including a DL subband, or a flexible time unit including a DL subband, which is not limited by the disclosure.

The first time unit may be in units of a slot, a symbol or a span, which is not limited by the disclosure. One span includes several consecutive symbols.

In a possible implementation, the base station may determine the time domain resource range based on a protocol.

In another possible implementation, the base station may configure the time domain resource range for the UE. After configuring this target time domain resource range, the base station may send an indication to the UE to inform the UE of the target time domain resource range.

In the above embodiments, the base station may accurately determine, under any TDD slot structure, the time domain resource range to which the time domain resource occupied by the subband belongs. The subband is at the first time unit, and the transmission direction of the first time unit is opposite to the transmission direction the subband or the transmission direction of the first time unit is flexible. The domain resource occupied by the subband may thus be configured for the UE within the time domain resource range, which improves a reliability of duplex traffic and realizes a high availability.

In some optional embodiments, after determining the time domain resource range, the base station may configure a position of the specific time domain resource occupied by the subband for the UE within the time domain resource range.

In some optional embodiments, the base station may configure the position of the specific time domain resource occupied by the subband for the UE within the time domain resource range through a separate display signaling.

Certainly, the base station may also determine the specific time domain resource occupied by the subband in other ways, such as according to a protocol, which is not limited by the disclosure.

In some optional embodiments, the base station may determine a plurality of time units within at least one first periodicity as the time domain resource range. The first periodicity is a period indicated by the base station through a first TDD slot structure.

In the embodiments of the disclosure, the first TDD slot structure includes, but is not limited to, any of the following: a common TDD slot structure, a UE-dedicated TDD slot structure, and both the common TDD slot structure and the UE-dedicated TDD slot structure.

In the embodiments of the disclosure, the common TDD slot structure may be a TDD slot structure shared by a plurality of UEs, which is configured by the base station for the UE through tdd-UL-DL-ConfigurationCommon. The base station may carry the tdd-UL-DL-ConfigurationCommon through an SIB 1.

The UE-dedicated TDD slot structure may be a UE-dedicated TDD slot structure configured for the UE by the base station through tdd-UL-DL-ConfigurationDedicated. The base station may carry the tdd-UL-DL-ConfigurationDedicated in an RRC message.

The common TDD slot structure may include one or more first periodicities. The UE-dedicated TDD slot structure may also include one or more first periodicities.

In a case where there are a plurality of first periodicities, the base station may determine all the time units within the plurality of the first periodicities as the time domain resource range.

Alternatively, in a case where there are a plurality of first periodicities, the base station may determine a plurality of time units within each of the first periodicities as the time domain resource range, respectively.

In the above embodiment, the base station may determine a plurality of time units within at least one first periodicity as the time domain resource range according to the protocol, to achieve a purpose of accurately determining the time domain resource range to which the time domain resource occupied by the subband belongs, thereby improving the reliability of full-duplex traffic and realizing a high availability.

In some optional embodiments, the base station may determine the time domain resource range. That is, the base station sends an indication to the UE to indicate the time domain resource range.

In a possible implementation, the indication is sent through an explicit signaling. That is, the base station directly indicates the first time domain resource range, and the UE may determine the first time domain resource range as the time domain resource range.

For example, the indication may include a system message, such as SIBn, n being a positive integer. Alternatively, the indication may include an RRC message.

For example, where the indication indicates that the first time domain resource range includes a total of m time units starting from the nth time unit, the UE determines the time domain resource range of (n, n+m-1) as the time domain resource range. The time unit may be in units of slot, symbol or span.

Certainly, the base station sends an indication to the UE in an implicit way, so that the UE may determine the time domain resource range, which is not limited in the disclosure.

In the above embodiments, the base station may determine the time domain resource range by itself and send the indication to the UE to inform the UE of the time domain resource range. In this way, the base station may configure the time domain resource occupied by the subband for the UE within the time domain resource range subsequently, which improves the reliability of full-duplex traffic and achieves a high availability.

In some optional embodiments, a first value and a first time granularity may be agreed upon by a protocol. The base station determines a second time domain resource range based on the predefined first value and the first time granularity, and determines the second time domain resource range as the time domain resource range. The first value may be a positive number, and the first time granularity may be a real time, for example, milliseconds or other time granularities such as slot, symbol, etc.

For example, when the protocol stipulates that the first value is 10 and the first time granularity is milliseconds, the UE determines a time domain resource range of 10 milliseconds as the time domain resource range.

For another example, when the protocol stipulates that the first value is 20 and the first time granularity is milliseconds, the UE determines a time domain resource range of 20 milliseconds as the time domain resource range.

In the embodiments of the disclosure, the protocol may stipulate a correspondence relationship between different SCSs and different values and time granularities, so that the base station may determine a corresponding second value and a second time granularity based on an SCS of a current serving cell. The base station determines a third time domain resource range based on the second value and second time granularity, and then determines the third time domain resource range as the time domain resource range.

For example, when the SCS of the current serving cell is 15kHz, the corresponding second value is 1 and the second time granularity is slot, the base station can determine 1 slot as the time domain resource range.

In the above embodiments, the base station may accurately determine the time domain resource range based on the predefined value and time unit granularity defined by the protocol or in a manner stipulated by the protocol. So that, the time domain resource occupied by the subband for the UE may be then configured within the time domain resource range, which improves a reliability of full-duplex traffic and realizes a high availability.

In some optional embodiments, the base station may determine one or more second periodicities indicated by a SFI combination, and then determine all the time units within the second periodicity having the longest period duration as the time domain resource range.

It should be noted that an SFI indicates a cell-specific TDD slot structure, and the SIF combination is sent to the UE in a form of a list. That is, the base station sends the SIF combination to the UE through a list, and each column of the list corresponds to one SIF combination.

Certainly, the base station may also determine a plurality of time units within the second periodicity having the shortest period duration as the time domain resource range. Alternatively, the base station may determine a plurality of time units in any other second periodicity as the time domain resource range, which is not limited by the disclosure.

In the above embodiments, the base station may determine the second periodicity based on the SIF combination and then determine the time domain resource range based on the second periodicity, so as to configure the time domain resource occupied by the subband for the UE within the time domain resource range, thereby improving a reliability of full-duplex traffic and realizing a high availability.

In order to facilitate the understanding of the above solution, the disclosure provides the following embodiments.

Embodiment 1. It is assumed that the UE is a Rel-18 UE or a future version UE with a half-duplex capability or a duplex capability, which is not limited by the disclosure, the base station can send and receive data simultaneously within a SBFD time unit, and the UE can receive DL data within the SBFD time unit or send UL data within the SBFD time unit. The SBFD time unit is a DL time unit including a UL subband, a flexible time unit including a UL subband, a UL time unit including a DL subband, or a flexible time unit including a DL subband.

In this embodiment, it is assumed that the base station configures a dual periodicity common TDD slot structure through tdd-UL-DL-ConfigurationCommon, and the two periodicities are P1 and P2, respectively. In this embodiment, it is assumed that the slot structures of P1 and P2 are {DDF} and {DF}, respectively, as shown in FIG. 3. Slot#2 and slot#4 are flexible slots, slot#2 includes flexible symbols and UL symbols, and slot#4 includes flexible symbols and UL symbols.

In this embodiment, the base station and the UE determine a time domain resource range to which time domain resource occupied by a UL subband belong, respectively, according to the following methods.

The base station determines, according to the configured P1 and P2, the time domain resource range to which the time domain resource occupied by the UL subband belong;

The UE determines the time domain resource range to which the time domain resource occupied by the UL subband belong according to P1 and P2 configured by the base station.

In detail, when the common TDD slot structure includes two periodicities, namely P1 and P2, the base station allocates the time domain resource occupied by the UL subband to the UE within the time domain ranges of P1 and P2.

Correspondingly, the terminal parses or determines an indication of the time domain resource occupied by the UL subband within the time domain ranges of P1 and P2. In this embodiment, assuming that the SCS is 15kHz and one slot occupies 1 millisecond, the base station and the UE determine the time domain ranges of P1 and P2, i.e., a total of 5ms, as the time domain resource range, and determine the time domain resource occupied by the UL subband within the time domain resource range.

The method of this embodiment may also be used to determine the time domain resource range to which the time domain resource occupied by the DL subband belong. The determination method is similar to that of determining the time domain resource range to which the time domain resource occupied by the UL subband belong, and will not be repeated herein.

The patent does not impose any limitation on how the base station indicates or determines the time domain resource occupied by the SBFD subband within the time domain resource range.

Embodiment 2. It is assumed that the UE is a Rel-18 UE or a future version UE with a half-duplex capability or a duplex capability, which is not limited by the disclosure, the base station can send and receive data simultaneously within a SBFD time unit, and the UE can receive DL data within the SBFD time unit or send UL data within the SBFD time unit. The SBFD time unit is a DL time unit including a UL subband, a flexible time unit including a UL subband, a UL time unit including a DL subband, or a flexible time unit including a DL subband.

In this embodiment, the base station indicates a first time domain resource range by displaying an indication, and the terminal uses it as the time domain resource range.

In detail, the base station sends an explicit indication to the terminal to inform the UE of the first time domain resource range, and the UE determines the time domain resource range according to the indication. The base station allocates the time domain resource occupied by the UL/DL subband to the UE within the time domain resource range.

The base station may configure the first time domain resource range for the UE through a SIB1 or a UE-dedicated RRC message, or may indicate the first time domain resource range through other types of explicit signaling, which is not limited by the disclosure.

In this embodiment, it is assumed that the base station indicates to the UE the first time domain resource range W to which the time domain resource occupied by the SBFD subband belong through a SIB1. W is in units of slot or millisecond, which is not limited by the disclosure.

W may be an absolute time, such as an integer multiple of 20 milliseconds.

Or, W may be a relative time, including a plurality of TDD UL-DL periodicities, which is not limited by the disclosure.

The method of this embodiment may also be used to determine the time domain resource range to which the time domain resource occupied by the DL subband belong. The determination method is similar to that of determining the time domain resource range to which the time domain resource occupied by the UL subband belong, which will not be repeated here.

The patent does not impose any limitation on how the base station indicates or determines the time domain resource occupied by the SBFD subband within the time domain resource range.

Embodiment 3. It is assumed that the UE is a Rel-18 UE or a future version UE with a half-duplex capability or a duplex capability, which is not limited by the disclosure, the base station can send and receive data simultaneously within a SBFD slot, and the UE can receive DL data within the SBFD slot or send UL data within the SBFD slot. The SBFD slot is a DL slot including a UL subband, a flexible slot including a UL subband, a UL slot including a DL subband, or a flexible slot including a DL subband.

In this embodiment, it is assumed that the base station configures a dual periodicity common TDD slot structure through tdd-UL-DL-ConfigurationCommon, and the two periodicities are P1 and P2. In this embodiment, the slot structures of P1 and P2 are {DDF} and {DF}, respectively, as shown in FIG. 3.

In this embodiment, the base station and the UE determine the time domain resource range to which the time domain resource occupied by the UL/DL subband belong respectively according to the following methods.

The UE determines the time domain resource range to which the time domain resource of the UL subband belongs according to P1 and P2 configured by the base station.

The base station configures the time domain resource occupied by the UL subband for the UE within the time domain resource ranges corresponding to P1 and P2, respectively.

In this embodiment, the base station configures the time domain resource for the SBFD subband in P1 and P2, respectively.

If the base station only configures a single periodicity P1 as the time domain resource range, the base station configures the time domain resource occupied by the UL subband for the UE within P1.

The patent does not impose any limitation on how the base station indicates or determines the time domain resource occupied by the SBFD subband within the time domain resource range.

Embodiment 4. It is assumed that the UE is a Rel-18 UE or a future version UE with a half-duplex capability or a duplex capability, which is not limited by the disclosure, the base station can send and receive data simultaneously within a SBFD slot, and the UE can receive DL data within the SBFD slot or send UL data within the SBFD slot. The SBFD slot is a DL slot including a UL subband, a flexible slot including a UL subband, a UL slot including a DL subband, or a flexible slot including a DL subband.

In this embodiment, the base station and the UE determine the second time domain resource based on the predefined first value and first time granularity, and determine the second time domain resource as the time domain resource range occupied by the SBFD subband. The first value and the first time granularity are predefined by the protocol, such as 10ms, 20ms or N slots. N is a positive integer.

Different SCSs may also correspond to different second values and second time granularities. For example, when the SCS is 15kHz, it corresponds to 20ms, and when the SCS is 30kHz, it corresponds to 10ms. The UE and the base station may determine a third time domain resource based on the second value and the second time granularity, and determine the third time domain resource as the time domain resource range occupied by the SBFD subband. The patent does not impose any limitation on the correspondence relationship between SCSs and the second values and the second time granularities.

The patent does not impose any limitation on how the base station indicates or determines the time domain resource occupied by the SBFD subband within the time domain resource range.

Embodiment 5. It is assumed that the UE is a Rel-18 UE or a future version UE with a half-duplex capability or a duplex capability, which is not limited by the disclosure, the base station can send and receive data simultaneously within a SBFD slot, and the UE can receive DL data within the SBFD slot or send UL data within the SBFD slot. The SBFD slot is a DL slot including a UL subband, a flexible slot including a UL subband, a UL slot including a DL subband, or a flexible slot including a DL subband.

In this embodiment, the base station and the UE determine the time domain resource range to which the time domain resource occupied by the SBFD subband belong according to the following methods.

The UE determines the time domain resource range to which the time domain resource occupied by the UL subband belongs according to the second periodicity indicated by the SFI combination.

In this embodiment, it is assumed that the base station and the UE determine, according to the SFI combination, all time units in the second period having the longest period duration as the time domain resource range.

In detail, assuming that the maximum periodicity in the SFI combination list configured by the base station for the UE is 20 slots, the base station and the UE determine that the time domain resource range includes 20 slots. That is, the base station configures the time domain resource occupied by the SBFD subband for the UE within every 20 slots, and the UE determines the time domain resource occupied by the SBFD subband within every 20 slots.

The method of this embodiment may also be used to determine the time domain resource range to which the time domain resource occupied by the DL subband belong. The determination method is similar to that of determining the time domain resource range to which the time domain resource occupied by the UL subband belong, which will not be described in detail herein.

The patent does not impose any limitation on how the base station indicates or determines the time domain resource occupied by the SBFD subband within the time domain resource range.

In the above embodiment, the UE can accurately determine the time domain resource range to which the time domain resource occupied by the sub-band belong under any TDD slot structure. The sub-band is at the first time unit, the transmission direction of the first time unit is opposite to the transmission direction of the sub-band or the transmission direction of the first time unit is flexible. This embodiment can improve the reliability of duplex traffic and achieve a high availability.

Corresponding to the above embodiments of the resource determination methods, the disclosure also provides embodiments of the resource determination apparatuses.

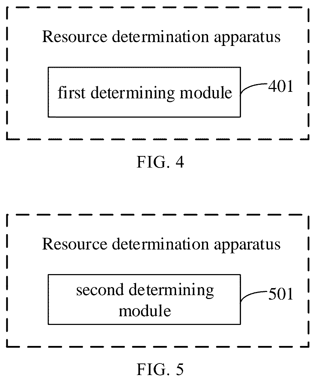

As illustrated in FIG. 4, FIG. 4 is a block diagram of a resource determination apparatus illustrated according to an example embodiment. The apparatus is applied to a UE, and includes:

a first determining module 401, configured to determine a time domain resource range to which a time domain resource occupied by a subband belongs, in which the subband is at a first time unit, a transmission direction of the first time unit is opposite to a transmission direction of the subband or the transmission direction of the first time unit is flexible.

In an embodiment of the disclosure, the first determining module includes:
a first determining sub-module, configured to determine a plurality of time units within at least one first periodicity as the time domain resource range, in which the first periodicity is a period indicated by a base station through a first TDD slot structure.

In an embodiment of the disclosure, the first TDD slot structure includes any one of:
a common TDD slot structure;
a UE-dedicated TDD slot structure; and
the common TDD slot structure and the UE-dedicated TDD slot structure.

In an embodiment of the disclosure, in a case that there are a plurality of first periodicities, the first determining module includes:
a second determining sub-module, configured to determine a plurality of time units within a plurality of the first periodicities as the time domain resource range; or
a third determining sub-module, configured to determine a plurality of time units within each of the first periodicities as the time domain resource range, respectively.

In an embodiment of the disclosure, the apparatus further includes:
a receiving module, configured to receive an indication from a base station, in which the indication indicates a first time domain resource range;
the first determining module including:
   a fourth determining sub-module, configured to determine the first time domain resource range as the time domain resource range.

In an embodiment of the disclosure, the indication includes any one of:
a system message; and
a UE-dedicated RRC message.

In an embodiment of the disclosure, the apparatus further includes:
a third determining module, configured to determine a second time domain resource range based on a predefined first value and a first time granularity;
the first determining module including:
   a fifth determining sub-module, configured to determine the second time domain resource range as the time domain resource range.

In an embodiment of the disclosure, the apparatus further includes:
a fourth determining module, configured to determine, based on a correspondence relationship between different SCSs and different values and time granularities, a second value and a second time granularity corresponding to a SCS of a serving cell; and
a fifth determining module, configured to determine a third time domain resource range based on the second value and the second time granularity;
the first determining module including:
   a sixth determining sub-module, configured to determine the third time domain resource range as the time domain resource range.

In an embodiment of the disclosure, the apparatus further includes:
a sixth determining module, configured to determine a second periodicity indicated by a SFI combination;
the first determining module including:
   a seventh determining sub-module, configured to determine a plurality of time units within the second periodicity having the longest period duration as the time domain resource range.

As illustrated in FIG. 5, FIG. 5 is a block diagram of a resource determination apparatus illustrated according to an example embodiment. The apparatus is applied to a base station, and includes:
a second determining module 501, configured to determine a time domain resource range to which a time domain resource occupied by a subband belongs, in which the subband is at a first time unit, a transmission direction of the first time unit is opposite to a transmission direction of the subband or the transmission direction of the first time unit is flexible.

In an embodiment of the disclosure, the second determining module includes:
an eighth determining sub-module, configured to determine a plurality of time units within at least one first periodicity as the time domain resource range, in which the first periodicity is a period indicated by the base station through a first TDD slot structure.

In an embodiment of the disclosure, the first TDD slot structure includes any one of:
a common TDD slot structure;
a UE-dedicated TDD slot structure; and
the common TDD slot structure and the UE-dedicated TDD slot structure.

In an embodiment of the disclosure, in a case that there are a plurality of first periodicities, the second determining module includes:
a ninth determining sub-module, configured to determine a plurality of time units within a plurality of the first periodicities as the time domain resource range; or
a tenth determining sub-module, configured to determine a plurality of time units within each of the first periodicities as the time domain resource range, respectively.

In an embodiment of the disclosure, the apparatus further includes:
a sending module, configured to send an indication to a UE, in which the indication indicates a first time domain resource range;
the second determining module including:
   an eleventh determining sub-module, configured to determine the first time domain resource range as the time domain resource range.

In an embodiment of the disclosure, the indication includes any one of:
a system message; and
a UE-dedicated RRC message.

In an embodiment of the disclosure, the apparatus further includes:
a seventh determining module, configured to determine a second time domain resource range based on a predefined first value and a first time granularity;
the second determining module including:
   a twelfth determining sub-module, configured to determine the second time domain resource range as the time domain resource range.

In an embodiment of the disclosure, the apparatus further includes:
an eighth determining module, configured to determine, based on a correspondence relationship between different SCSs and different values and time granularities, a second value and a second time granularity corresponding to a SCS of a serving cell; and
a ninth determining module, configured to determine a third time domain resource range based on the second value and the second time granularity;
the second determining module including:
   a thirteenth determining sub-module, configured to determine the third time domain resource range as the time domain resource range.

In an embodiment of the disclosure, the apparatus further includes:
a tenth determining module, configured to determine a second periodicity indicated by a SFI combination;
the second determining module including:
   a fourteenth determining sub-module, configured to determine a plurality of time units within the second periodicity having the longest period duration as the time domain resource range.

Since the apparatus embodiments basically correspond to the method embodiments, for relevant contents of the apparatus embodiments reference may be made to the description of the method embodiments. The apparatus embodiments described above are merely schematic, in which the modules described as separate components may or may not be physically separated, and the components shown as modules may or may not be physical modules, i.e., they may be located in a single place or may be distributed to a plurality of network modules. Some or all of these modules may be selected according to actual needs to fulfill the purpose of the solution of the disclosure, which can be understood and implemented by those skilled in the art without inventive work.

Correspondingly, the disclosure also provides a computer readable storage medium. The storage medium stores a computer program, and the computer program is used to execute the resource determination method performed by the UE.

Correspondingly, the disclosure also provides a computer readable storage medium. The storage medium stores a computer program, and the computer program is used to execute the resource determination method performed by the base station.

Correspondingly, the disclosure also provides a resource determination apparatus, including:
a processor; and
a memory for storing instructions executable by the processor;
in which the processor is configured to execute the resource determination method performed by the UE.

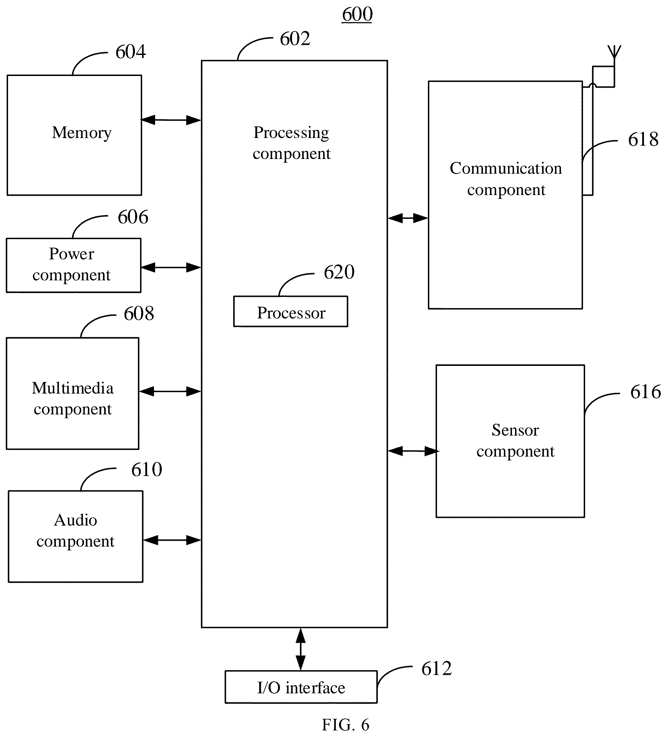

FIG. 6 is a block diagram of a resource determination apparatus 600 according to an example embodiment. For example, the device 600 may be a mobile phone, a tablet computer, an e-book reader, a multimedia playback device, a wearable device, a vehicle-mounted user equipment, an iPad, a smart TV and other UEs.

As illustrated in FIG. 6, the device 600 may include one or more of the following components: a processing component 602, a memory 604, a power component 606, a multimedia component 608, an audio component 610, an input/output (I/O) interface 612, a sensor component 616, and a communication component 618.

The processing component 602 typically controls overall operations of the device 600, such as operations associated with display, telephone call, data random access, camera operation and recording operation. The processing component 602 may include one or more processors 620 to execute instructions to implement all or part of the steps in the above described resource determination method. Moreover, the processing component 602 may include one or more modules which facilitate the interaction between the processing component 602 and other components. For example, the processing component 602 may include a multimedia module to facilitate the interaction between the multimedia component 608 and the processing component 602. For another example, the processing component 602 can read executable instructions from the memory to realize the steps of the resource determination method provided by the above embodiments.

The memory 604 is configured to store various types of data to support the operation of the device 600. Examples of such data include instructions for any applications or methods operated on the device 600, contact data, phonebook data, messages, pictures, videos, etc. The memory 604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the multimedia component 608 includes a front-facing camera and/or a rear-facing camera. When the device 600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal may be further stored in the memory 604 or transmitted via the communication component 618. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 616 includes one or more sensors to provide status assessments of various aspects of the device 600. For instance, the sensor component 616 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 616 may include a proximity sensor configured to detect the presence of nearb y objects without any physical contact. The sensor component 616 may also include a light sensor, such as a Complementary Metal Oxide Semiconductor (CMOS) or Charge-Coupled Device (CCD) image sensor, for use in imaging applications. In some embodiments, the sensor component 616 may also include an accelerometer sensor, a gyroscope sensor, a magnetic sensor, a pressure sensor, or a temperature sensor.

The communication component 618 is configured to facilitate communication, wired or wirelessly, between the device 600 and other devices. The device 600 can access a wireless network based on a communication standard, such as Wi-Fi, 2G, 3G, 4G, 5G or 6G, or a combination thereof. In an example embodiment, the communication component 618 receives a broadcast signal or broadcast associated information from an external broadcast management system via a broadcast channel. In an example embodiment, the communication component 618 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology and other technologies.

In an example embodiment, the device 600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the resource determination method described above performed by the UE.

In an example embodiment, there is also provided a non-transitory computer readable storage medium, such as the memory 604. The medium includes instructions executable by the processor 620 in the device 600, for performing the resource determination method described above. For example, the non-transitory computer readable storage medium may be a ROM, a Random Access Memory (RAM), a CD-ROM, a magnetic tape, a floppy disc and an optical data storage device.

Correspondingly, the disclosure also provides a resource determination apparatus, including:
a processor; and
a memory for storing instructions executable by the processor;
in which the processor is configured to execute the resource determination method performed by the base station.

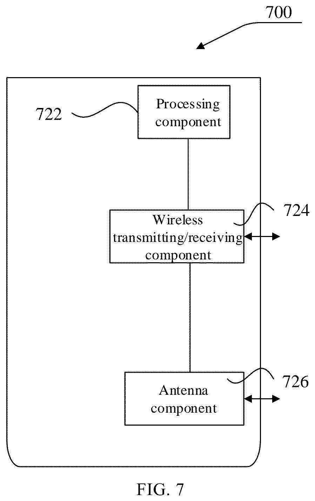

As illustrated in FIG. 7, FIG. 7 is a schematic diagram of a device 700 according to an example embodiment. The device 700 may be provided as a base station. As illustrated in FIG. 7, the device 700 includes a processing component 722, a wireless transmitting/receiving component 724, an antenna component 726, and a signal processing portion specific to a wireless interface. The processing component 722 may further include at least one processor.

One of the processors in the processing component 722 is configured to perform any of the resource determination methods described above.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples are considered as illustrative only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A resource determination method, performed by a user equipment (UE), comprising:
determining a time domain resource range to which a time domain resource occupied by a subband belongs, wherein the subband is at a first time unit, a transmission direction of the first time unit is opposite to a transmission direction of the subband or the transmission direction of the first time unit is flexible.

2. The method of claim 1, wherein determining the time domain resource range to which the time domain resource occupied by the subband belongs comprises:
determining a plurality of time units within at least one first periodicity as the time domain resource range, wherein the first periodicity is a periodicity indicated by a base station through a first time division duplexing (TDD) slot structure.

3. The method of claim 2, wherein the first TDD slot structure comprises any one of:
a common TDD slot structure;
a UE-dedicated TDD slot structure; and
both the common TDD slot structure and the UE-dedicated TDD slot structure.

4. The method of claim 2 or 3, wherein in a case that there are a plurality of first periodicities, determining the plurality of time units within the at least one first periodicity as the time domain resource range comprises:
determining a plurality of time units within a plurality of the first periodicities as the time domain resource range; or
determining a plurality of time units within each of the first periodicities as the time domain resource range, respectively.

5. The method of claim 1, further comprising:
receiving an indication from a base station, wherein the indication indicates a first time domain resource range;
determining the time domain resource range to which the time domain resource occupied by the subband belongs, comprising:
determining the first time domain resource range as the time domain resource range.

6. The method of claim 5, wherein the indication comprises any one of:
a system message; and
a UE-dedicated radio resource control (RRC) message.

7. The method of claim 1, further comprising:
determining a second time domain resource range based on a predefined first value and a first time granularity;
determining the time domain resource range to which the time domain resource occupied by the subband belongs, comprising:
determining the second time domain resource range as the time domain resource range.

8. The method of claim 1, further comprising:
determining, based on a correspondence relationship between different sub-carrier spaces (SCSs) and different values and time granularities, a second value and a second time granularity corresponding to an SCS of a serving cell; and
determining a third time domain resource range based on the second value and the second time granularity;
wherein determining the time domain resource range to which the time domain resource occupied by the subband belongs comprises:
determining the third time domain resource range as the time domain resource range.

9. The method of claim 1, further comprising:
determining a second periodicity indicated by a slot format indicator (SFI) combination;
determining the time domain resource range to which the time domain resource occupied by the subband belongs, comprising:
determining a plurality of time units within the second periodicity having the longest period duration as the time domain resource range.

10. A resource determination method, performed by a base station, comprising:
determining a time domain resource range to which a time domain resource occupied by a subband belongs, wherein the subband is at a first time unit, a transmission direction of the first time unit is opposite to a transmission direction of the subband or the transmission direction of the first time unit is flexible.

11. The method of claim 10, wherein determining the time domain resource range to which the time domain resource occupied by the subband belongs comprises:
determining a plurality of time units within at least one first periodicity as the time domain resource range, wherein the first periodicity is a periodicity indicated by the base station through a first time division duplexing (TDD) slot structure.

12. The method of claim 11, wherein the first TDD slot structure comprises any one of:
a common TDD slot structure;
a UE-dedicated TDD slot structure; and
both the common TDD slot structure and the UE-dedicated TDD slot structure.

13. The method of claim 11 or 12, wherein in a case that there are a plurality of first periodicities, determining the plurality of time units within the at least one first periodicity as the time domain resource range comprises:
determining a plurality of time units within a plurality of the first periodicities as the time domain resource range; or
determining a plurality of time units within each of the first periodicities as the time domain resource range, respectively.

14. The method of claim 10, further comprising:
sending an indication to a user equipment (UE), wherein the indication indicates a first time domain resource range;
determining the time domain resource range to which the time domain resource occupied by the subband belongs, comprising:
determining the first time domain resource range as the time domain resource range.

15. The method of claim 14, wherein the indication comprises any one of:
a system message; and
a UE-dedicated radio resource control (RRC) message.

16. The method of claim 10, further comprising:
determining a second time domain resource range based on a predefined first value and a first time granularity;
determining the time domain resource range to which the time domain resource occupied by the subband belongs, comprising:
determining the second time domain resource range as the time domain resource range.

17. The method of claim 10, further comprising:
determining, based on a correspondence relationship between different sub-carrier spaces (SCSs) and different values and time granularities, a second value and a second time granularity corresponding to an SCS of a serving cell; and
determining a third time domain resource range based on the second value and the second time granularity;
wherein determining the time domain resource range to which the time domain resource occupied by the subband belongs comprises:
determining the third time domain resource range as the time domain resource range.

18. The method of claim 10, further comprising:
determining a second periodicity indicated by a slot format indicator (SFI) combination;
determining the time domain resource range to which the time domain resource occupied by the subband belongs, comprising:
determining a plurality of time units within the second periodicity having the longest period duration as the time domain resource range.

19. A resource determination apparatus, applied to a user equipment (UE), comprising:
a first determining module, configured to determine a time domain resource range to which a time domain resource occupied by a subband belongs, wherein the subband is at a first time unit, a transmission direction of the first time unit is opposite to a transmission direction of the subband or the transmission direction of the first time unit is flexible.

20. A resource determination apparatus, applied to a base station, comprising:
a second determining module, configured to determine a time domain resource range to which a time domain resource occupied by a subband belongs, wherein the subband is at a first time unit, a transmission direction of the first time unit is opposite to a transmission direction of the subband or the transmission direction of the first time unit is flexible.

21. A computer readable storage medium, wherein the storage medium stores a computer program, and the computer program is used to execute the resource determination method according to any one of claims 1-9.

22. A computer readable storage medium, wherein the storage medium stores a computer program, and the computer program is used to execute the resource determination method according to any one of claims 10-18.

23. A resource determination apparatus, comprising:
a processor; and
a memory for storing instructions executable by the processor;
wherein the processor is configured to execute the resource determination method according to any one of claims 1-9.

24. A resource determination apparatus, comprising:
a processor; and
a memory for storing instructions executable by the processor;
wherein the processor is configured to execute the resource determination method according to any one of claims 10-18.
